# DEMANDE DE BREVET EUROPEEN

(11) **EP 2 953 418 A1**
(43) Date de publication de la demande: **09.12.2015**
(21) Numéro de dépôt: 15166496.8
(22) Date de dépôt: 06.05.2015
(51) Int. Cl.: H04W 88/16, H04W 76/00

(54) **PROCÉDÉ D'INTÉGRATION D'UN DISPOSITIF DE GESTION DE COEUR DE RÉSEAU ET DISPOSITIFS METTANT EN OEUVRE UN TEL PROCÉDÉ**

(30) Priorité: 05.06.2014 FR 1455112
(71) Demandeur: Electronique Telematique Etelm, 91140 Villejust (FR)
(72) Inventeur: Minot, Pierre, 91470 LES MOLIERES (FR)
(74) Mandataire: Pontet Allano & Associes

(57) **Abrégé**

Procédé pour connecter un dispositif appartenant à un premier réseau de communication mobile du type à bande étroite, à un second réseau de communication mobile du type à large bande, le dispositif implémentant une couche protocolaire selon une première norme de communication mobile. Le procédé comprend une mise en oeuvre d'une couche de transposition, la couche protocolaire étant reliée au second réseau de communication du type à large bande via une liaison du type « Internet Protocole » (IP). Le procédé comprend en outre une configuration de la couche protocolaire pour transmettre toute donnée reçue par le premier dispositif vers la couche de transposition et une configuration de la couche de transposition pour transmettre toute donnée reçue par la couche de transposition vers le second réseau de communication.

## Description

### Domaine technique

La présente invention concerne une méthode d'intégration de réseaux radio à la norme Européenne TETRA dans un réseau radio de type EPS et LTE « Long Term Evolution ».

La présente invention concerne en outre une méthode d'intégration de réseaux radio conforme à la famille des standards technologiques américains APCO International Project 25 (ou P25) dans un réseau radio de type EPS et LTE « Long Term Evolution ».

La présente invention concerne en outre une méthode d'intégration de réseaux radio conformes à la norme DMR (Digital Mobile Radio) de l'ETSI (European Telecommunication Standard Institute) dans un réseau radio de type EPS et LTE « Long Term Evolution ».

Cette invention permet d'utiliser des terminaux radio TETRA dans un tel réseau de 3^{ème} ou 4^{ème} génération ou plus, en offrant des services propres aux réseaux TETRA et des interconnexions directes avec les terminaux radio non TETRA tels que les terminaux radio de la famille 3GPP LTE.

Elle permet en outre d'utiliser des terminaux radio P25 dans un tel réseau de 3^{ème} ou 4^{ème} génération ou plus, en offrant des services propres aux réseaux P25 et des interconnexions directes avec les terminaux radio non P25 tels que les terminaux radio de la famille 3GPP LTE.

Elle permet en outre d'utiliser des terminaux radio DMR dans un tel réseau de 3^{ème} ou 4^{ème} génération ou plus, en offrant des services propres aux réseaux P25 et des interconnexions directes avec les terminaux radio non P25 tels que les terminaux radio de la famille 3GPP LTE.

### Etat de la technique antérieure

Les réseaux radio conformes à la norme TETRA, respectivement aux standards technologiques P25, respectivement à la norme DMR sont répandus dans le monde entier. Les terminaux conformes à la norme TETRA ont une forte concentration sur le continent européen. Les terminaux conformes à la norme P25 ont une forte concentration sur le continent américain. Les réseaux TETRA et P25 sont utilisés dans un cadre professionnel, particulièrement pour les besoins des forces de sécurité publique. La DMR est une norme de radiocommunication numérique pour les réseaux radio privés utilisés par des PME-PMI, administrations et collectivités locales. Cette technologie présente de nombreux avantages tels que le doublement de la capacité spectrale et de la capacité du relais.

Les réseaux P25 réseaux utilisent des bandes étroites de fréquence réservées, avec des canaux espacés de 25 kHz, respectivement de largeur 12,5 kHz (P25 Phase 1 - FDMA) ou 6,25 kHz (P25 Phase 2 - TDMA ou FDMA) espacés de 6,25 kHz et offrent un ensemble très complet de fonctions ne nécessitant pas de fort débit. Les réseaux à bandes étroites sont constitués de sites radio dont la portée est relativement importante.

A l'inverse, les réseaux radio de quatrième génération et plus, principalement basés sur la technologie 3GPP LTE Advanced, utilisent des sites radio de portée souvent inférieure sur des bandes de fréquence différentes, utilisées avec des canaux très larges offrant des services nécessitant des débits élevés.

La notion de réseau à bande étroite ou à large bande est claire pour l'homme du métier. Une bande étroite est un canal radio dans lequel la bande passante du message transmis ne dépasse pas excessivement la bande cohérence du canal. Le terme bande étroite est utilisé par opposition au terme large bande. Dans la télécommunication filaire ou sans fil, un canal à bande étroite est considéré comme ayant une réponse en fréquence plate ; la bande passante du signal transmis sera de ce fait inférieure à la bande cohérence du canal. Les réseaux selon les normes TETRA, P25 ou DMR sont des réseaux à bandes étroites. Les réseaux selon la norme LTE sont des réseaux à large bande. On peut encore définir un réseau à bande étroite comme un réseau radio dont la largeur de bande est inférieure à 500 kHz - tels que les réseaux TETRA, DMR ou P25 - et un réseau à large bande comme un réseau dont l'occupation spectrale est supérieure à 1 MHz - tel que les réseaux LTE.

La connexion de ces deux types de réseaux présente un fort intérêt.

Il a en particulier été envisagé de développer des terminaux radio aptes à émettre et recevoir dans les deux modes (TETRA, respectivement P25, respectivement DMR et LTE) et configurés pour utiliser les réseaux LTE dès lors qu'ils sont couverts par ceux-ci et les réseaux TETRA, respectivement P25, respectivement DMR, dans le cas contraire. Ce procédé de connexion des deux types de réseaux présente néanmoins de nombreux inconvénients. En particulier, cette solution nécessite le changement complet des parcs de terminaux ainsi que la mise en place de passerelles de service haut niveau.

Il a par ailleurs été envisagé l'utilisation des réseaux 3GPP LTE comme couche de transport pour les réseaux TETRA, respectivement P25, respectivement DMR : cette méthode présente également de nombreux inconvénients. En particulier, elle ne permet pas de liaison directe entre des terminaux radio LTE et des terminaux radio TETRA, respectivement P25, respectivement DMR.

On connaît enfin des passerelles (« gateway ») entre un réseau TETRA, respectivement P25, respectivement DMR, et un réseau EPS avec accès radio LTE. Ces passerelles offrent de simples fonctions d'interconnexion de réseaux, sans pouvoir assurer une intégration réelle. Par exemple, la mobilité n'est pas gérée et un terminal appelant doit composer le numéro d'un correspondant en fonction du lieu où celui-ci est supposé se trouver.

La méthode ici présentée permet l'interconnexion complète de réseaux TETRA, respectivement P25, respectivement DMR, et de réseaux large bande radio de 3^{ème} ou 4^{ème} génération ou plus, tels que les réseaux à la norme 3GPP EPS mettant en oeuvre des accès radio de la famille LTE sans présenter les inconvénients précédemment cités tout en offrant des facilités de communication directes entre terminaux de technologies différentes et en offrant la possibilité d'optimiser l'utilisation du spectre radio.

Un but de la présente invention est de proposer un procédé et dispositif de connexion des réseaux TETRA, respectivement P25, respectivement DMR, et des réseaux radio de 3^{ème} ou 4^{ème} génération ou plus, typiquement basés sur la famille des normes EPS et 3GPP LTE, permettant une réutilisation de parcs de terminaux radio existant.

Un autre but de la présente invention est de proposer un procédé et dispositif de connexion des réseaux TETRA, respectivement P25, respectivement DMR, et des réseaux radio de 3^{ème} ou 4^{ème} génération ou plus, basés sur la famille des technologies 3GPP EPS et 3GPP LTE permettant la mise à disposition des services TETRA existant, respectivement 'P25' existant, respectivement DMR.

Un autre but de la présente invention est de proposer un procédé et dispositif de connexion des réseaux TETRA, respectivement P25, respectivement DMR, et des réseaux radio de 3^{ème} ou 4^{ème} génération ou plus, basés sur la famille des technologies 3GPP EPS et LTE, permettant une migration aisée lors de l'évolution d'un réseau TETRA, respectivement P25, respectivement DMR, vers un réseau de la famille des technologies 3GPP EPS et 3GPP LTE.

Un autre but de la présente invention est de proposer un procédé et dispositif de connexion des réseaux TETRA, respectivement P25, respectivement DMR, et les réseaux de la famille des technologies 3GPP EPS et 3GPP LTE permettant une optimisation économique entre des réseaux de la famille technologique 3GPP EPS et 3GPP LTE en milieu urbain et des réseaux TETRA, respectivement P25, respectivement DMR, en milieu isolé, directement connectés entre eux.

Un autre but de la présente invention est de proposer un procédé et dispositif de connexion des réseaux TETRA, respectivement P25, respectivement DMR, et des réseaux radio de 3^{ème} ou 4^{ème} génération ou plus, 3GPP LTE permettant une réutilisation des canaux radiofréquences alloués à des réseaux TETRA, respectivement P25, respectivement DMR, (canaux à bande étroite) aux endroits où des canaux radio des réseaux de 3^{ème} ou 4^{ème} génération ou plus (canaux large bande), objets de l'interconnexion, fréquences LTE ne sont pas disponibles (ou aux endroits où il n'est pas rentable de déployer des réseaux radio de 3^{ème} ou 4^{ème} génération ou plus 3GPP LTE).

### Exposé de l'invention

On atteint au moins l'un des objectifs précités avec un procédé pour connecter un dispositif appartenant à un premier réseau de communication mobile du type à bande étroite, à un second réseau de communication mobile du type à large bande, le dispositif implémentant une couche protocolaire pour communiquer avec une première pluralité de terminaux mobiles selon une première norme de communication mobile. Le procédé peut comprendre une mise en oeuvre d'une couche de transposition, la couche protocolaire étant reliée au second réseau de communication du type à large bande via une liaison du type « Internet Protocole » (IP), le procédé comprenant en outre une configuration de la couche protocolaire pour transmettre toute donnée reçue par le dispositif vers la couche de transposition et une configuration de la couche de transposition pour transmettre toute donnée reçue par la couche de transposition vers le second réseau de communication.

Avantageusement, le procédé selon l'invention peut comprendre une modification du dispositif par intégration de la couche de transposition. De préférence, la couche de transposition peut être mise en oeuvre dans la couche protocolaire.

En ce qui concerne la mobilité dans le cas de l'architecture 'passerelle', la mobilité des terminaux à bande étroite continue d'être gérée par les équipements de ce réseau à bande étroite et la mobilité des terminaux large bande est gérée par le coeur de réseau large bande. Dans le cas de l'intégration des stations de base à bande étroite dans un réseau large bande, la mobilité de tous les terminaux, que ce soit la mobilité des terminaux à bande étroite ou des terminaux large bande, est gérée de manière homogène et identique par le coeur de réseau large bande.

En ce qui concerne la gestion des services, dans le cas de l'architecture 'passerelle', les réseaux large bande et bandes étroites gèrent chacun les services procurés aux différents terminaux, selon leurs critères propres. L'équipement 'passerelle' n'est sollicité que lorsque l'un des services appelé par l'un des réseaux fait appel à des ressources de l'autre réseau. Dans le cas de l'intégration des stations de base à bande étroite dans le réseau large bande avec un procédé selon l'invention, les services sont gérés de manière homogène par le seul serveur de services du réseau large bande, en général un serveur IMS.

En ce qui concerne la gestion des applications, dans le cas de l'architecture 'passerelle', les réseaux large bande et bande étroites gèrent chacun leurs applications (poste dispatcher, boite de messagerie, boite vocale, enregistreur, serveur de transmission de donnée,..) selon leurs critères propres. Dans le cas de l'intégration des stations de base à bande étroite dans un réseau large bande, les serveurs d'application sont directement connectés au coeur de réseau large bande et gèrent les applications tant pour les terminaux large bande que pour les terminaux à bande étroite.

En ce qui concerne la gestion des équipements d'infrastructure, dans le cas de l'architecture 'passerelle', les réseaux large bande et bande étroites gèrent chacun leurs équipements d'infrastructure. Il y a par exemple une gestion des alarmes, une gestion de la configuration, une gestion des logiciels, une gestion de la performance, etc. Dans le cas de l'intégration des stations de base à bande étroite dans un réseau large bande, les équipements d'infrastructure sont gérés de manière homogène par des serveurs spécialisés, tous directement connectés au coeur de réseau large bande. On retrouve une gestion des alarmes, une gestion de la configuration, une gestion logicielle, une gestion des performances.

Ainsi, dans le cas de l'intégration des stations de base à bande étroite dans un réseau large bande, le réseau bénéficie d'une uniformité et d'une mutualisation de la gestion de la mobilité des terminaux à bande étroite, de la gestion des services, de la gestion des applications et de la gestion des équipements d'infrastructure.

La pile protocolaire modifiée comprend les couches de transport normalisées et un module de transposition fonctionnel, typiquement implanté au niveau de la couche NAS (Non Access Stratum).

De plus, le procédé selon l'invention peut être mis en oeuvre pour établir des échanges entre des terminaux mobiles selon la première norme de communication mobile placés sous la gestion du dispositif modifié et d'autres terminaux mobiles selon la première norme de communication mobile placés sous la gestion d'un second dispositif modifié, via le second réseau de communication mobile du type à large bande.

De plus, le procédé selon l'invention peut être mis en oeuvre pour établir des échanges entre des terminaux mobiles selon la première norme de communication mobile placés sous la gestion du dispositif modifié et des terminaux mobiles selon la seconde norme de communication mobile placés sous la couverture de stations de base appartenant au second réseau de communication du type à large bande.

Par ailleurs, le procédé selon l'invention peut être mis en oeuvre pour établir des échanges entre des terminaux mobiles selon la première norme de communication mobile placés sous la gestion du dispositif modifié et des terminaux mobiles selon la seconde norme de communication mobile placés sous la couverture de stations fixes appartenant au second réseau de communication du type à large bande.

Dans une version particulière, le premier réseau de communication du type à bande étroite peut satisfaire la norme TETRA « TErrestrial Trunked Radio ». Dans une autre version particulière, le premier réseau de communication du type à bande étroite peut satisfaire à la famille des standards technologiques P25 « APCO International Project 25 ». Dans une autre version particulière, le premier réseau de communication du type à bande étroite peut satisfaire à la famille de la norme DMR.

De plus, le second réseau de communication du type à large bande peut satisfaire à une norme de la famille des technologies 3GPP EPS et LTE « Long Term Evolution ».

Avantageusement, la couche de transposition peut implémenter une interface normalisée S1 pour le Plan Contrôle de la norme 3GPP EPS et LTE.

De plus, l'interface normalisée S1 peut être complétée par une interface normalisée X2 de la famille des technologies 3GPP EPS et pour une liaison entre stations de base proches.

En outre, l'interface normalisée S1 peut être complétée par une interface normalisée X2 de la famille des technologies 3GPP EPS pour une liaison entre stations fixes proches.

De plus, l'interface normalisée S1 peut être complétée par une interface normalisée M1 de la famille des technologies 3GPP EPS et LTE.

Selon un autre aspect de l'invention, il est proposé un dispositif de gestion de coeur de réseau appartenant à un premier réseau de communication mobile du type à bande étroite, adapté pour être connecté à un second réseau de communication mobile du type à large bande selon une seconde norme de communication mobile, le dispositif de gestion de coeur de réseau implémentant une couche protocolaire pour communiquer avec une première pluralité de station selon une première norme de communication mobile aptes à communiquer avec des terminaux selon la première norme de communication mobile. Le dispositif de gestion de coeur de réseau peut comprendre une couche de transposition, la couche protocolaire étant reliée au second réseau de communication du type à large bande via une liaison du type « Internet Protocole » (IP), la couche protocolaire étant configurée pour transmettre toute donnée reçue par le dispositif de gestion de coeur de réseau vers la couche de transposition et la couche de transposition étant configurée pour transmettre toute donnée reçue par la couche de transposition vers le second réseau de communication.

De préférence, le dispositif de gestion est modifié par intégration de la couche de transposition. La couche de transposition peut être intégrée dans la couche protocolaire.

Avantageusement, le dispositif de gestion de coeur de réseau selon l'invention peut être configuré pour établir des échanges entre des terminaux mobiles selon la première norme de communication mobile placés sous sa gestion ou sous celle d'une station avec laquelle il communique, et des terminaux mobiles selon la seconde norme de communication mobile placés sous la couverture de stations appartenant au second réseau de communication du type à large bande.

Avantageusement, le dispositif de gestion de coeur de réseau selon l'invention peut être configuré pour établir des échanges entre des terminaux mobiles selon la première norme de communication mobile placés sous sa gestion ou sous celle d'une station avec laquelle il communique, et tout autre équipement fixe à la première norme de communication selon l'invention, via le second réseau de communication mobile du type à large bande.

Avantageusement, le dispositif de gestion de coeur de réseau selon l'invention peut être configuré pour établir des échanges entre des terminaux mobiles selon la première norme de communication mobile placés sous sa gestion ou sous celle d'une station avec laquelle il communique, et d'autres terminaux mobiles placés sous la gestion d'un autre dispositif de gestion de coeur de réseau selon l'invention, via le second réseau de communication mobile du type à large bande.

Avantageusement, le second réseau de communication du type à large bande peut satisfaire la norme 3GPP EPS et LTE « Long Term Evolution ».

Avantageusement, la couche de transposition peut implémenter une interface normalisée S1 de la famille des technologies 3GPP EPS et LTE.

Avantageusement, l'interface normalisée S1 peut être complétée par une interface normalisée X2 de la famille des technologies 3GPP EPS et LTE.

Avantageusement, l'interface normalisée S1 peut être complétée par une interface normalisée.

Deux dispositifs de gestion de coeur de réseau sont maintenant exposés. Le premier est un commutateur de gestion pouvant appartenir à un premier réseau selon la norme TETRA. Le second est un sous-système radio fixe pouvant appartenir à un premier réseau selon la norme P25.

Selon un autre aspect de l'invention, il est également proposé un commutateur de gestion (« SWITCH ») appartenant à un premier réseau de communication mobile du type à bande étroite, adapté pour être connecté à un second réseau de communication mobile du type à large bande selon une seconde norme de communication mobile, le commutateur de gestion implémentant une couche protocolaire pour communiquer avec une première pluralité de station de base selon une première norme de communication mobile. Le commutateur peut être modifié par intégration d'une couche de transposition dans la couche protocolaire et peut être relié au second réseau de communication du type à large bande via une liaison du type « Internet Protocole » (IP).

Le commutateur de gestion selon l'invention peut être configuré pour établir des échanges entre des terminaux mobiles selon la première norme de communication mobile placés sous sa couverture ou sous la couverture d'une station de base avec laquelle il communique, et des terminaux mobiles selon la seconde norme de communication mobile placés sous la couverture de stations de base appartenant au second réseau de communication du type à large bande.

Le commutateur de gestion selon l'invention peut être configuré pour établir des échanges entre des terminaux mobiles selon la première norme de communication mobile placés sa gestion ou sous la gestion d'une station de base avec laquelle il communique et d'autres terminaux mobiles placés sous la gestion d'un autre commutateur selon l'invention, via le second réseau de communication mobile du type à large bande.

Selon un autre aspect de l'invention, il est également proposé un sous-système radio fixe appartenant à un premier réseau de communication mobile du type à bande étroite, adapté pour être connecté à un second réseau de communication mobile du type à large bande selon une seconde norme de communication mobile, le sous-système radio fixe implémentant une couche protocolaire pour communiquer avec une première pluralité de station fixe selon une première norme de communication mobile. Le sous-système radio fixe peut être est modifié par intégration d'une couche de transposition dans la couche protocolaire et peut être relié au second réseau de communication du type à large bande via une liaison du type « Internet Protocole » (IP).

Le sous-système radio fixe selon l'invention peut être configuré pour établir des échanges entre des terminaux mobiles selon la première norme de communication mobile placés sous sa gestion ou sous celle d'une station fixe avec laquelle il communique, et des terminaux mobiles selon la seconde norme de communication mobile placés sous la couverture de stations de fixe appartenant au second réseau de communication du type à large bande.

Le sous-système radio fixe selon l'invention peut être configuré pour établir des échanges entre des terminaux mobiles selon la première norme de communication mobile placés sous sa gestion ou sous celle d'une station fixe avec laquelle il communique, et d'autres terminaux mobiles placés sous la gestion d'un autre sous-système radio fixe selon l'invention, via le second réseau de communication mobile du type à large bande.

Le sous-système radio fixe selon l'invention peut être configuré pour établir des échanges entre des terminaux mobiles selon la première norme de communication mobile placés sous sa gestion ou sous celle d'une station fixe avec laquelle il communique, et tout autre équipement fixe à la première norme de communication selon l'invention, via le second réseau de communication mobile du type à large bande.

Le second réseau de communication du type à large bande peut satisfaire la norme 3GPP EPS et LTE « Long Term Evolution ».

La couche de transposition peut implémenter une interface normalisée S1 de la famille des technologies 3GPP EPS et LTE.

L'interface normalisée S1 peut être complétée par une interface normalisée X2 de la famille des technologies 3GPP EPS et LTE.

L'interface normalisée S1 peut être complétée par une interface normalisée M1 de la famille des technologies 3GPP EPS et LTE.

Selon un autre aspect de l'invention, il est proposé un système comprenant :
- un premier dispositif de gestion de coeur de réseau appartenant à un premier réseau de communication mobile du type à bande étroite, ce premier dispositif de gestion de coeur de réseau implémentant une couche protocolaire pour communiquer avec une première pluralité de station selon une première norme de communication mobile,
- un deuxième dispositif de gestion de coeur de réseau appartenant à un second réseau de communication mobile du type à large bande selon une seconde norme de communication mobile,
la couche protocolaire étant reliée au second réseau de communication du type à large bande via une liaison du type « Internet Protocole » (IP).

Le système selon l'invention peut comprendre une couche de transposition. La couche protocolaire peut être configurée pour transmettre toute donnée reçue par le premier dispositif de gestion de coeur de réseau vers la couche de transposition et la couche de transposition peut être configurée pour transmettre toute donnée reçue par la couche de transposition vers le deuxième dispositif de gestion de coeur de réseau.

Avantageusement, le premier dispositif de gestion de coeur de réseau peut être modifié par intégration de la couche de transposition. De préférence, la couche de transposition est intégrée dans la couche protocolaire.

De manière avantageuse, le système selon l'invention peut en outre comprendre un serveur de gestion de mobilité appartenant au second réseau de communication mobile prévu pour gérer la mobilité pour des terminaux aptes à communiquer selon la seconde norme de communication mobile, le serveur de gestion de mobilité étant également apte à gérer la mobilité pour des terminaux aptes à communiquer selon la première norme de communication mobile.

De manière avantageuse, le système selon l'invention peut en outre comprendre un serveur de gestion de services appartenant au second réseau de communication mobile prévu pour gérer les services pour des terminaux aptes à communiquer selon la seconde norme de communication mobile, le serveur de gestion de services étant également apte à gérer les services pour des terminaux aptes à communiquer selon la première norme de communication mobile.

De manière avantageuse, le système selon l'invention peut en outre comprendre un serveur de gestion d'applications appartenant au second réseau de communication mobile prévu pour gérer les applications pour des terminaux aptes à communiquer selon la seconde norme de communication mobile, le serveur de gestion d'applications étant également apte à gérer les applications pour des terminaux aptes à communiquer selon la première norme de communication mobile.

De manière avantageuse, le système selon l'invention peut en outre comprendre un serveur de gestion d'équipements d'infrastructure appartenant au second réseau de communication mobile prévu pour gérer les équipements d'infrastructures pour des terminaux aptes à communiquer selon la seconde norme de communication mobile, le serveur de gestion d'équipements d'infrastructure étant également apte à gérer les équipements d'infrastructures pour des terminaux aptes à communiquer selon la première norme de communication mobile.

De manière avantageuse, le système selon l'invention peut comprendre au moins un autre dispositif de gestion de coeur de réseau appartenant à un autre réseau de communication mobile du type à bande étroite, l'au moins un autre dispositif de gestion de coeur de réseau implémentant une couche protocolaire pour communiquer avec une autre pluralité de station selon une troisième norme de communication mobile, la couche protocolaire de cet autre dispositif de gestion de coeur de réseau étant reliée au second réseau de communication du type à large bande via une liaison du type « Internet Protocole » (IP).

Cet autre dispositif de gestion de coeur de réseau peut comprendre une couche de transposition. La couche protocolaire de cet autre dispositif de gestion de coeur de réseau peut être configurée pour transmettre toute donnée reçue par cet autre dispositif de gestion de coeur de réseau vers la couche de transposition de cet autre dispositif de gestion de coeur de réseau et la couche de transposition de cet autre dispositif de gestion de coeur de réseau peut être configurée pour transmettre toute donnée reçue par la couche de transposition de cet autre dispositif de gestion de coeur de réseau vers le deuxième dispositif de gestion de coeur de réseau.

Cet autre dispositif de gestion de coeur de réseau peut être modifié par intégration de la couche de transposition. Cette couche de transposition peut être intégrée dans la couche protocolaire.

Avantageusement, le second réseau de communication du type à large bande peut satisfaire la norme 3GPP EPS et LTE « Long Term Evolution ».

Avantageusement, la couche de transposition du premier dispositif de gestion de coeur de réseau peut implémenter une interface normalisée S1 de la famille des technologies 3GPP EPS et LTE. De même, la couche de transposition de l'autre dispositif de gestion de coeur de réseau peut implémenter une interface normalisée S1 de la famille des technologies 3GPP EPS et LTE.

Avantageusement, l'interface normalisée S1 du premier dispositif de gestion de coeur de réseau peut être complétée par une interface normalisée X2 de la famille des technologies 3GPP EPS et LTE. De même l'interface normalisée S1 de l'autre dispositif de gestion de coeur de réseau peut être complétée par une interface normalisée X2 de la famille des technologies 3GPP EPS et LTE.

Avantageusement, l'interface normalisée S1 du premier dispositif de gestion de coeur de réseau peut être complétée par une interface normalisée M1 de la famille des technologies 3GPP EPS et LTE. De même l'interface normalisée S1 de l'autre dispositif de gestion de coeur de réseau peut être complétée par une interface normalisée M1 de la famille des technologies 3GPP EPS et LTE.

Ainsi, le coeur de réseau LTE peut donc servir de passerelle commune à tous les réseaux à bande étroite. Dans le cas des solutions 'passerelle', la gestion de la mobilité implique de connaître la localisation des terminaux appelés. Cet aspect disparait complètement avec un système selon l'invention. Le serveur de mobilité n'a alors plus besoin de connaître le numéro du coeur de réseau appelé.

Avantageusement, la première norme de communication et la troisième norme de communication sont identiques. Par exemple, la première norme de communication est la norme TETRA et la troisième norme de communication est encore la norme TETRA. Ainsi, une interconnexion entre deux terminaux appartenant à deux réseaux distincts TETRA est assurée via le réseau mobile de type à large bande. Le serveur de mobilité n'a alors plus besoin de connaître le numéro du coeur de réseau TETRA appelé.

Avantageusement, la première norme de communication et la troisième norme de communication sont différentes. Par exemple, la première norme de communication est TETRA et la troisième norme de communication est P25. Ainsi, une interconnexion entre différentes normes de communication mobile à bandes étroites est assurée via le réseau mobile de type à large bande. Le serveur de mobilité n'a alors plus besoin de connaître le numéro du coeur de réseau TETRA ou P25 appelé. Le serveur de mobilité n'a pas non plus besoin de connaître la norme du réseau appelé.

### Description des figures et modes de réalisation

D'autres avantages et particularités de l'invention apparaîtront à la lecture de la description détaillée de mises en oeuvre et des modes de réalisation nullement limitatif, et des dessins annexés suivants :
- la figure 1 est une représentation schématique d'un mode de réalisation d'un procédé selon l'invention dans lequel un commutateur de gestion selon l'invention est représenté,
- la figure 2 est une représentation schématique d'un mode de réalisation d'un commutateur de gestion selon l'invention,
- les figures 3A et 3B sont des représentations schématiques d'un mode de réalisation d'un procédé selon l'invention dans lequel un sous-système radio fixe selon l'invention est représenté,
- la figure 4 est une représentation schématique d'un mode de réalisation d'un sous-système radio fixe selon l'invention, et
- la figure 5 est une représentation schématique d'un mode de réalisation d'un système selon l'invention.

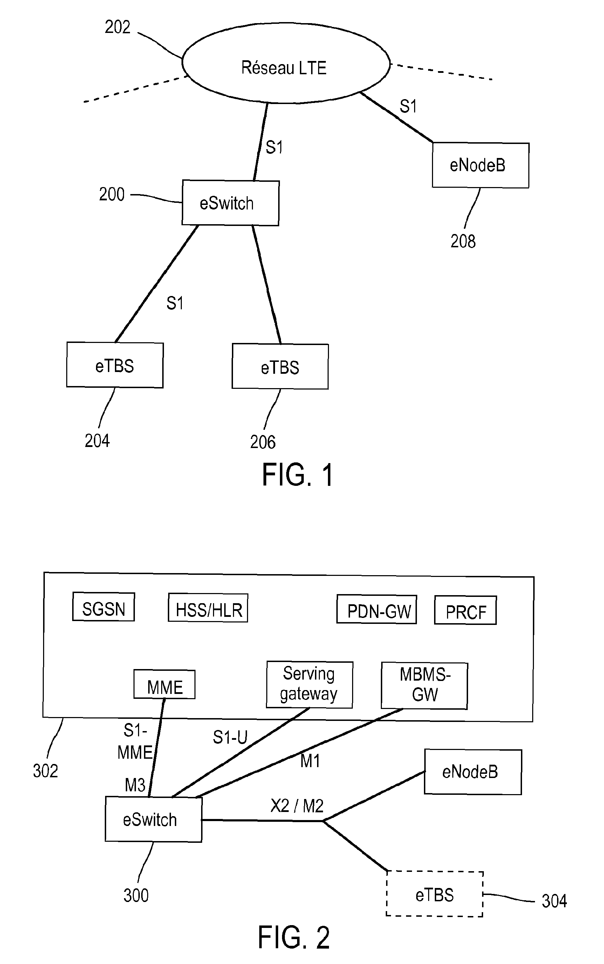

La figure 1 est une représentation schématique dans laquelle est représentée une interconnexion directe d'un commutateur de gestion 200 selon l'invention avec un second réseau 202.

Le commutateur de gestion (« eSwitch ») 200 appartient à un premier réseau de communication mobile du type à bande étroite. Il est adapté pour être connecté au second réseau de communication 202 mobile du type à large bande selon une seconde norme de communication mobile. Le second réseau de communication du type à large bande satisfait une norme de 3^{ème} ou 4^{ème} génération ou plus, de la famille des technologies 3GPP EPS et la norme 3GPP LTE « Long Term Evolution ».

Le commutateur de gestion 200 implémente une couche protocolaire pour communiquer avec deux stations de base 204, 206, selon une première norme de communication mobile.

Le commutateur de gestion 200 est modifié par intégration d'une couche de transposition dans la couche protocolaire et est relié au second réseau de communication 202 du type à large bande via une liaison du type « Internet Protocole » (IP). La couche protocolaire est configurée pour transmettre toute donnée reçue par le commutateur de gestion vers la couche de transposition. La couche de transposition est configurée pour transmettre toute donnée reçue par la couche de transposition vers le second réseau de communication. La couche de transposition implémente une interface normalisée S1 de la norme spécifiée pour la famille des technologies 3GPP EPS et LTE. L'interface normalisée S1 est complétée par une interface normalisée X2 de la famille des technologies 3GPP EPS et LTE 3GPP X2 (non représentée). L'interface normalisée S1 peut être complétée par une interface normalisée M1 de la famille des technologies 3GPP EPS et LTE 3GPP M1 (non représentée).

Le commutateur de gestion 200 est configuré pour établir des échanges entre des terminaux mobiles selon la première norme de communication mobile (non représentés) placés sous la gestion des stations de base 204, 206 et d'autres terminaux mobiles placés sous la gestion d'un autre commutateur selon l'invention (non représenté), via le second réseau de communication mobile du type à large bande.

Le commutateur 200 est également configuré pour établir des échanges entre des terminaux mobiles (non représentés) selon la première norme de communication mobile placés sous la couverture du commutateur de gestion et des terminaux mobiles (non représentés) selon la seconde norme de communication mobile placés sous la couverture d'une station de base 208 appartenant au second réseau de communication du type à large bande.

La figure 2 est une représentation schématique dans laquelle est représentée une interconnexion directe d'un commutateur de gestion 300, dit eSwitch, selon l'invention avec les équipements d'un réseau radio de 3^{ème} ou 4^{ème} génération ou plus, de la famille des technologies 3GPP EPS et 3GPP LTE 302.

Le commutateur de gestion 300 eSwitch appartient à un premier réseau de communication mobile du type à bande étroite. Il est adapté pour être connecté à un second réseau 302 de communication mobile du type à large bande selon une seconde norme de communication mobile. Le second réseau de communication du type à large bande satisfait une norme de 3^{ème} ou 4^{ème} génération ou plus, de la famille des technologies 3GPP EPS et la norme 3GPP LTE « Long Term Evolution ».

Le réseau de 3^{ème} ou 4^{ème} génération ou plus, de la famille des technologies 3GPP EPS et LTE 302 comprend des modules usuels présents dans un réseau de la famille des technologies 3GPP EPS et LTE tels que :
- un module SGSN : *Serving GPRS Support Node,* GPRS signifiant General Packet Radio Service ;
- un module HSS/HLR : Home Suscriber Server / Home Location Register ;
- un module PDN-GW : Packet Data Network GateWay ;
- un module PCRF : Policy and Charging Rules Function ;
- un module MME : Mobility Management Entity ;
- un module Serving Gateway ;
- un module MBMS-GW : Multimedia Broadcast Multicast Service GateWay.

Ainsi que l'illustre la figure 2, le commutateur de gestion 300 eSwitch comprend une couche de transposition qui implémente une interface normalisée S1 de la norme spécifiée pour la famille des technologies 3GPP EPS et LTE. On observe ainsi que le commutateur de gestion 300 eSwitch est directement relié au module MME par une interface 3GPP S1-MME/M3 de la famille des technologies 3GPP EPS et LTE. Le commutateur de gestion 300 eSwitch est directement relié au module Serving Gateway par une interface S1-U de la famille des technologies 3GPP EPS et LTE. Le commutateur de gestion 300 eSwitch est directement relié au module MBMS-GW par une interface M1. Le commutateur de gestion 300 eSwitch est directement relié à un eNobeB par une interface X2/M2 de la famille des technologies 3GPP EPS et LTE 3GPP X2/M2. Enfin, le commutateur de gestion 300 eSwitch est directement relié à une station de base 304, dite eTbs, par une interface X2/M2 de la famille des technologies 3GPP EPS et LTE 3GPP X2/M2.

Le tableau suivant présente pour chaque interface, le type d'interface, les caractéristiques de chaque extrémité, les caractéristiques protocolaires et les services SAE (« System Architecture Evolution »).

| **Nom de interface** | **Type** | **Caractéristiques des extrémités** | | **Caractéristiques Protocolaires** | | **Services SAE** |
|---|---|---|---|---|---|---|
| | | **Extrémité 1** | **Extrémité 2** | **User Plane** | **Control Plane** | |
| ***E-UTRAN Uu*** | Air interface / Radio | Terminal UE | eNB | **E-UTRA/LTE** | | EPS/E-UTRAN EPS/eMB MS |
| | | | eTBS | **E-UTRA/LTE** | | EPS/eTER AN EPS/E-UTRAN EPS/eMB MS |
| ***TETRA*** | Air interface / Radio | Terminal MS | eTBS | **TETRA** | | EPS/ eTERAN eMBMS/e TERAN |
| ***S1*** | Filaire - IP | eTBS | MME | **S1-U (GTP-U/UDP/IP)** | **S1-MME (S1AP/SCTP/IP)** | EPS/TET RA |
| **X2** | Filaire - IP | eTBS | eTBS | **X2-U (GTP-U/UDP/IP)** | **X2-C (X2AP/SCTP/IP)** | EPS/eTER AN eTERAN/e TERAN |
| | | | eNB | **X2-U (GTP-U/UDP/IP)** | **X2-C (X2AP/SCTP/IP)** | EPS/eTER AN eTERAN/ E-UTRAN |
| ***M1*** | Filaire - IP | eTBS | eMBMS-GW | **M1 (GTP-U/UDP/IP)** | ***Non applicable*** | eMBMS/e TERAN |
| ***M2*** | Filaire - IP | eTBS/MCE (Entité eTBS hébergeant l'entité logique MCE) | eTBS | ***Non applicable*** | **M2 (M2AP/SCTP/IP)** | eMBMS/e TERAN |
| | | | eNB | ***Non applicable*** | **M2 (M2AP/SCTP/IP)** | eMBMS/e TERAN |
| ***M3*** | Filaire - IP | eTBS/MCE (Entité eTBS hébergeant l'entité logique MCE) | MME | ***Non applicable*** | **M3 (M3AP/SCTP/IP)** | eMBMS/e TERAN |

Les terminaux TETRA sous couverture du commutateur de gestion 300 eSwitch selon l'invention sont décrits dans le module HSS ou HLR du réseau de 3^{ème} ou 4^{ème} génération ou plus, de la famille des technologies 3GPP EPS et GPP LTE.

Ainsi, chaque terminal TETRA dispose d'un numéro IMSI identique à ceux utilisés pour les réseaux de 3^{ème} ou 4^{ème} génération ou plus, de la famille des technologies 3GPP EPS et 3GPP LTE.

Ainsi, le commutateur de gestion 300 eSwitch, selon l'invention permet une intégration complète des réseaux TETRA et des réseaux de 3^{ème} ou 4^{ème} génération ou plus, de la famille des technologies 3GPP EPS et 3GPP LTE. La mobilité est assurée à deux niveaux :
- par le réseau de 3^{ème} ou 4^{ème} génération ou plus, de la famille des technologies 3GPP EPS et LTE qui localise (dans sa base de données HSS/HLR) la localisation du sous réseau TETRA directement connecté au réseau de 3^{ème} ou 4^{ème} génération ou plus, de la famille des technologies 3GPP EPS et 3GPP LTE, et
- par le sous réseau TETRA qui localise le site radio sur lequel le mobile est inscrit.

Dans le cas où le sous réseau TETRA n'est constitué que d'un seul site radio, ce mécanisme se simplifie au sein du sous réseau TETRA.

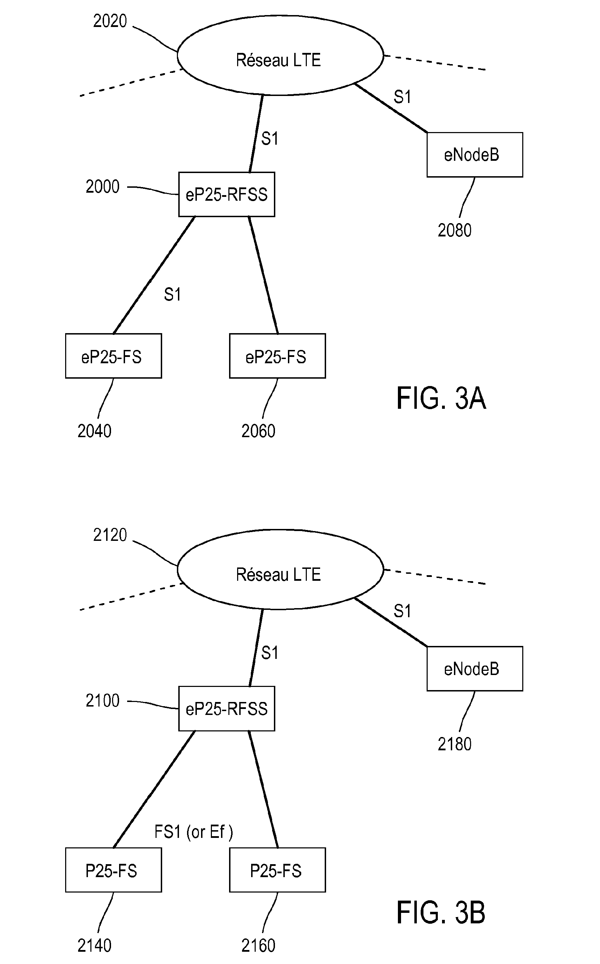

La figure 3A est une représentation schématique dans laquelle est représentée une interconnexion directe d'un sous-système radio fixe 2000 selon l'invention avec un second réseau 2020.

Le sous-système radio fixe (« eP25-RFSS ») 2000 appartient à un premier réseau de communication mobile du type à bande étroite. Il est adapté pour être connecté au second réseau de communication 2020 mobile du type à large bande selon une seconde norme de communication mobile.

Le second réseau de communication 2020 du type à large bande satisfait une norme de 3^{ème} ou 4^{ème} génération ou plus, de la famille des technologies 3GPP EPS et la norme 3GPP LTE « Long Term Evolution ».

Le sous-système radio fixe 2000 implémente une couche protocolaire pour communiquer avec deux stations fixes 2040, 2060, selon une première norme de communication mobile.

Le sous-système radio fixe 2000 est modifié par intégration d'une couche de transposition dans la couche protocolaire et est relié au second réseau de communication 2020 du type à large bande via une liaison du type « Internet Protocole » (IP). La couche protocolaire est configurée pour transmettre toute donnée reçue par le commutateur de gestion vers la couche de transposition. La couche de transposition est configurée pour transmettre toute donnée reçue par la couche de transposition vers le second réseau de communication. La couche de transposition implémente une interface normalisée S1 de la norme spécifiée pour la famille des technologies 3GPP EPS et LTE. L'interface normalisée S1 est complétée par une interface normalisée X2 de la famille des technologies 3GPP EPS et LTE 3GPP X2 (non représentée). L'interface normalisée S1 peut être complétée par une interface normalisée M1 de la famille des technologies 3GPP EPS et LTE 3GPP M1 (non représentée).

Le sous-système radio fixe 2000 est configuré pour établir des échanges entre des terminaux mobiles selon la première norme de communication mobile (non représentés) placés sous la gestion des stations fixes 2040, 2060 et d'autres terminaux mobiles placés sous la gestion d'un autre sous-système radio fixe selon l'invention (non représenté), via le second réseau de communication mobile du type à large bande.

Le sous-système radio fixe selon l'invention est également configuré pour établir des échanges entre des terminaux mobiles (non représentés) selon la première norme de communication mobile placés sous la couverture du sous-système radio fixe et des terminaux mobiles (non représentés) selon la seconde norme de communication mobile placés sous la couverture d'une station fixe 2080 appartenant au second réseau de communication du type à large bande.

La figure 3B est une représentation schématique dans laquelle est représentée une interconnexion directe d'un sous-système radio fixe 2100 selon l'invention avec un second réseau 2120.

Le sous-système radio fixe (« eP25-RFSS ») 2100 appartient à un premier réseau de communication mobile du type à bande étroite. Il est adapté pour être connecté au second réseau de communication 2120 mobile du type à large bande selon une seconde norme de communication mobile. Le second réseau de communication 2120 du type à large bande satisfait une norme de 3^{ème} ou 4^{ème} génération ou plus, de la famille des technologies 3GPP EPS et la norme 3GPP LTE « Long Term Evolution ».

Le sous-système radio fixe 2100 implémente une couche protocolaire pour communiquer avec deux stations fixes 2140 et 2160, selon une première norme de communication mobile.

Le sous-système radio fixe 2100 est modifié par intégration d'une couche de transposition dans la couche protocolaire et est relié au second réseau de communication 2120 du type à large bande via une liaison du type « Internet Protocole » (IP). La couche protocolaire est configurée pour transmettre toute donnée reçue par le sous-système radio fixe vers la couche de transposition. La couche de transposition est configurée pour transmettre toute donnée reçue par la couche de transposition vers le second réseau de communication. La couche de transposition implémente une interface normalisée S1 de la norme spécifiée pour la famille des technologies 3GPP EPS et LTE. L'interface normalisée S1 est complétée par une interface normalisée X2 de la famille des technologies 3GPP EPS et LTE 3GPP X2 (non représentée). L'interface normalisée S1 peut être complétée par une interface normalisée M1 de la famille des technologies 3GPP EPS et LTE 3GPP M1 (non représentée).

Le sous-système radio fixe 2100 est configuré pour établir des échanges entre des terminaux mobiles selon la première norme de communication mobile (non représentés) placés sous la gestion des stations fixes 2140, 2160 et d'autres terminaux mobiles placés sous la gestion d'un autre sous-système radio fixe selon l'invention (non représenté), via le second réseau de communication mobile du type à large bande.

Le sous-système radio fixe selon l'invention est également configuré pour établir des échanges entre des terminaux mobiles (non représentés) selon la première norme de communication mobile placés sous la couverture du sous-système radio fixe et des terminaux mobiles (non représentés) selon la seconde norme de communication mobile placés sous la couverture d'une station fixe 2180 appartenant au second réseau de communication du type à large bande.

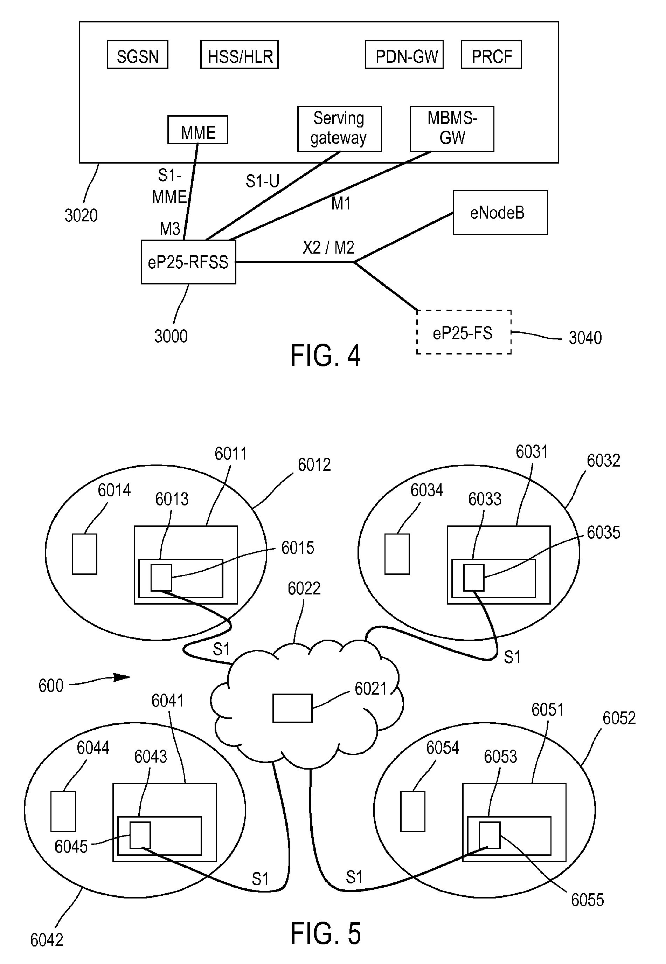

La figure 4 est une représentation schématique dans laquelle est représentée une interconnexion directe d'un sous-système radio fixe 3000, dit eP25-RSFS, selon l'invention avec les équipements d'un réseau radio de 3^{ème} ou 4^{ème} génération ou plus, de la famille des technologies 3GPP EPS et 3GPP LTE 3020.

Le sous-système radio fixe 3000, dit eP25-RSFS appartient à un premier réseau de communication mobile du type à bande étroite.

Il est adapté pour être connecté à un second réseau 3020 de communication mobile du type à large bande selon une seconde norme de communication mobile. Le second réseau de communication du type à large bande satisfait une norme de 3^{ème} ou 4^{ème} génération ou plus, de la famille des technologies 3GPP EPS et la norme 3GPP LTE « Long Term Evolution.

Le réseau de 3^{ème} ou 4^{ème} génération ou plus, de la famille des technologies 3GPP EPS et LTE 3020 comprend des modules usuels présents dans un réseau de la famille des technologies 3GPP EPS et LTE tels que :
- un module SGSN : *Serving GPRS Support Node,* GPRS signifiant General Packet Radio Service ;
- un module HSS/HLR : Home Suscriber Server / Home Location Register ;
- un module PDN-GW : Packet Data Network GateWay ;
- un module PCRF : Policy and Charging Rules Function ;
- un module MME : Mobility Management Entity ;
- un module Serving Gateway ;
- un module MBMS-GW : Multimedia Broadcast Multicast Service GateWay.

Ainsi que l'illustre la figure 4, le sous-système radio fixe 3000, dit eP25-RFSS comprend une couche de transposition qui implémente une interface normalisée S1 de la norme spécifiée pour la famille des technologies 3GPP EPS et LTE. On observe ainsi que sous-système radio fixe 3000, dit eP25-RFSS, est directement relié au module MME par une interface 3GPP S1-MME/M3 de la famille des technologies 3GPP EPS et LTE. Le sous-système radio fixe 3000, dit eP25-RFSS, est directement relié au module Serving Gateway par une interface S1-U de la famille des technologies 3GPP EPS et LTE. Le sous-système radio fixe 3000, dit eP25-RFSS, est directement relié au module MBMS-GW par une interface M1. Le sous-système radio fixe 3000, dit eP25-RFSS, est directement relié à un eNobeB par une interface X2/M2 de la famille des technologies 3GPP EPS et LTE 3GPP X2/M2. Enfin, le sous-système radio fixe 3000, dit eP25-RFSS, est directement relié à une autre station fixe 3040, dite eP25-FS, par une interface X2/M2 de la famille des technologies 3GPP EPS et LTE 3GPP X2/M2.

Le tableau suivant présente pour chaque interface, le type d'interface, les caractéristiques de chaque extrémité, les caractéristiques protocolaires et les services SAE (« System Architecture Evolution »).

| **Nom de l'interface** | **Type** | **Caractéristiques des extrémités** | | **Caractéristiques Protocolaires** | | **Services SAE** |
|---|---|---|---|---|---|---|
| | | **Extrémité 1** | **Extrémité 2** | **User Plane** | **Control Plane** | |
| ***E-UTRAN Uu*** | Air interface / Radio | Terminal UE | eNB | **E-UTRA/LTE** | | EPS/E-UTRAN EPS/eMBM S |
| ***APCO** P25* | Air interface / Radio | Terminal P25 | eP25-FS | **APCO P25 Common Air Interface (CAI)** | | EPS/eP25 eMBMS/eP 25 |
| | | | eP25-RFSS | | | |
| ***S1*** | Filaire - IP | eP25-FS | MME | | **S1-MME (S1AP/SCTP/IP)** | EPS/eP25 |
| | | | Serving-GW | **S1-U (GTP-U/UDP/IP)** | | |
| | | eP25-RFSS | MME | | **S1-MME (S1AP/SCTP/IP)** | |
| | | | Serving-GW | **S1-U (GTP-U/UDP/IP)** | | |
| ***X2*** | Filaire - IP | eP25-FS | eP25-FS | **X2-U (GTP-U/UDP/IP)** | **X2-C (X2AP/SCTP/IP)** | EPS/eP25 |
| | | | eP25-RFSS | **X2-U (GTP-U/UDP/IP)** | **X2-C (X2AP/SCTP/IP)** | EPS/eP25 |
| | | | eN B | **X2-U (GTP-U/UDP/IP)** | **X2-C (X2AP/SCTP/IP)** | EPS/eP25 EPS/E-UTRAN |
| | | eP25-RFSS | eNB | **X2-U (GTP-U/UDP/IP)** | **X2-C (X2AP/SCTP/IP)** | EPS/eP25 EPS/E-UTRAN |
| ***M1*** | Filaire - IP | eP25-FS | eMBMS-GW | **M1 (GTP-U/UDP/IP)** | ***Non applicable*** | eMBMS/eP 25 |
| | | eP25-RFSS | | **M1 (GTP-U/UDP/IP)** | ***Non applicable*** | eMBMS/eP 25 |
| ***M2*** | Filaire - IP | eP25-FS/MCE eP25-RFSS/MCE (entité eP25-FS or eP25-RFSS hébergeant l'entité logique MCE) | eP25-FS | ***Non applicable*** | **M2 (M2AP/SCTP/IP)** | eMBMS/eP 25 |
| | | | eP25-RFSS | ***Non applicable*** | **M2 (M2AP/SCTP/IP)** | eMBMS/eP 25 |
| | | | eNB | ***Non applicable*** | **M2 (M2AP/SCTP/IP)** | eMBMS/eP 25 EPS/eMBM S |
| ***M3*** | Filaire - IP | eP25-FS/MCE eP25-RFSS/MCE (entité eP25-FS or eP25-RFSS hébergeant l'entité logique MCE) | MME | ***Non applicable*** | **M3 (M3AP/SCTP/IP)** | eMBMS/eP 25 EPS/eMBM S |

Les terminaux P25 sous couverture du sous-système radio fixe 2000 selon l'invention sont décrits dans le module HSS ou HLR du réseau de 3^{ème} ou 4^{ème} génération ou plus, de la famille des technologies 3GPP EPS et GPP LTE.

Ainsi, chaque terminal P25 dispose d'un numéro d'abonné identique à ceux utilisés pour les réseaux de 3^{ème} ou 4^{ème} génération ou plus, de la famille des technologies 3GPP EPS et 3GPP LTE.

Ainsi, sous-système radio fixe 2000 selon l'invention permet une intégration complète des réseaux P25 et des réseaux de 3^{ème} ou 4^{ème} génération ou plus, de la famille des technologies 3GPP EPS et 3GPP LTE.
La mobilité est assurée à deux niveaux :
- par le réseau de 3^{ème} ou 4^{ème} génération ou plus, de la famille des technologies 3GPP EPS et LTE qui localise (dans sa base de données HSS/HLR) la localisation du sous réseau P25 directement connecté au réseau de 3^{ème} ou 4^{ème} génération ou plus, de la famille des technologies 3GPP EPS et 3GPP LTE, et
- par le sous réseau P25 qui localise le site radio sur lequel le mobile est inscrit.

Dans le cas où le sous réseau P25 n'est constitué que d'un seul site radio, ce mécanisme se simplifie au sein du sous réseau P25.

Il est maintenant décrit un mode de réalisation d'un système 600 selon l'invention.

Le système selon l'invention comprend :
- un commutateur de gestion 6011, aussi désigné par premier dispositif de gestion de coeur de réseau, appartenant à un premier réseau de communication mobile 6012 du type à bande étroite, le commutateur de gestion 6011 implémentant une couche protocolaire 6013 pour communiquer avec une première pluralité de station 6014 selon la norme TETRA ;
- un deuxième dispositif de gestion de coeur de réseau 6021 appartenant à un second réseau de communication mobile 6022 du type à large bande selon la norme LTE ;
- un commutateur de gestion 6031, aussi désigné par troisième dispositif de gestion de coeur de réseau, appartenant à un troisième réseau de communication mobile 6032 du type à bande étroite, le commutateur de gestion 6031 implémentant une couche protocolaire 6033 pour communiquer avec une troisième pluralité de station 6034 selon la norme TETRA ;

- un sous-système radio fixe 6041, aussi désigné par quatrième dispositif de gestion de coeur de réseau, appartenant à un quatrième réseau de communication mobile 6042 du type à bande étroite, le sous-système radio fixe 6041 implémentant une couche protocolaire 6043 pour communiquer avec une quatrième pluralité de station 6044 selon la norme P25 ;
- un cinquième dispositif de gestion de coeur de réseau 6051 appartenant à un cinquième réseau de communication mobile 6052 du type à bande étroite, le cinquième dispositif de gestion de coeur de réseau 6051 implémentant une couche protocolaire 6053 pour communiquer avec une cinquième pluralité de station 6054 selon la norme DMR.

Les couches protocolaires des premier, troisième, quatrième et cinquième dispositifs de gestion de coeur de réseau sont reliées au second réseau de communication du type à large bande via une liaison du type « Internet Protocole » (IP).

Les premier, troisième, quatrième et cinquième dispositifs de gestion de coeur de réseau sont respectivement modifiés par intégration de couche de transposition respectives 6015, 6035, 6045 et 6055 dans chacune des couches protocolaires 6013, 6033, 6043, 6053 des premier, troisième, quatrième et cinquième dispositifs.

Chacune des couches protocolaires 6013, 6033, 6043 et 6053 de ces dispositifs de gestion de coeur de réseau est configurée pour transmettre toute donnée reçue par un dispositif de gestion de coeur de réseau vers la couche de transposition respective 6015, 6035, 6045 et 6055 de cet autre dispositif de gestion de coeur de réseau.

Chacune des couches de transposition de ces dispositifs de gestion de coeur de réseau est configurée pour transmettre toute donnée reçue par cette couche de transposition de ce dispositif de gestion de coeur de réseau vers le deuxième dispositif de gestion de coeur de réseau 6021.

Chacune des couches de transposition de ces dispositifs de gestion de coeur de réseau implémentent une interface normalisée S1 de la famille des technologies 3GPP EPS et LTE.

Le second réseau de communication mobile 6022 comprend en outre :
- un serveur de gestion de mobilité (non représenté) prévu pour gérer la mobilité de terminaux aptes à communiquer selon la seconde norme de communication mobile ;
- un serveur de gestion de services prévu pour gérer les services pour des terminaux aptes à communiquer selon la seconde norme de communication mobile ;
- un serveur de gestion d'applications (non représenté) prévu pour gérer les applications pour des terminaux aptes à communiquer selon la seconde norme de communication mobile ;
- un serveur de gestion d'équipements d'infrastructure (non représenté) prévu pour gérer les équipements d'infrastructure pour des terminaux aptes à communiquer selon la seconde norme de communication mobile.

Avec le système selon l'invention, le serveur de gestion de mobilité est apte à gérer également la mobilité pour des terminaux aptes à communiquer selon les première, troisième, quatrième et cinquième normes de communication mobile. Ainsi, le serveur de gestion de mobilité est apte à gérer la mobilité pour des terminaux aptes à communiquer selon les normes TETRA, P25 et DMR.

Avec le système selon l'invention, le serveur de gestion de services est également apte à gérer les services pour des terminaux aptes à communiquer selon les première, troisième, quatrième et cinquième normes de communication mobile. Ainsi, le serveur de gestion de service est apte à gérer les services pour des terminaux aptes à communiquer selon les normes TETRA, P25 et DMR.

Avec le système selon l'invention, le serveur d'applications est également apte à gérer les applications pour des terminaux aptes à communiquer selon les première, troisième, quatrième et cinquième normes de communication mobile. Ainsi, le serveur de gestion d'applications est apte à gérer les applications pour des terminaux aptes à communiquer selon les normes TETRA, P25 et DMR.

Avec le système selon l'invention, le serveur de gestion d'équipements d'infrastructure est également apte à gérer les équipements d'infrastructure pour des terminaux aptes à communiquer selon les première, troisième, quatrième et cinquième normes de communication mobile. Ainsi, le serveur de gestion d'équipements d'infrastructure est apte à gérer les équipements d'infrastructure pour des terminaux aptes à communiquer selon les normes TETRA, P25 et DMR.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour connecter un dispositif (200 ; 300 ; 304 ; 2000 ; 2100 ; 3000 ; 3040) appartenant à un premier réseau de communication mobile du type à bande étroite, à un second réseau de communication mobile du type à large bande (202 ; 302 ; 2020 ; 2120 ; 3020), le dispositif implémentant une couche protocolaire pour communiquer avec une première pluralité de terminaux mobiles selon une première norme de communication mobile,
**caractérisé en ce qu'**il comprend une mise en oeuvre d'une couche de transposition, ladite couche protocolaire étant reliée au second réseau de communication du type à large bande via une liaison du type « Internet Protocole » (IP), ledit procédé comprenant en outre une configuration de ladite couche protocolaire pour transmettre toute donnée reçue par ledit dispositif vers ladite couche de transposition et une configuration de ladite couche de transposition pour transmettre toute donnée reçue par ladite couche de transposition vers ledit second réseau de communication.

2. Procédé selon la revendication 1, **caractérisé en ce qu'**il comprend une modification du dispositif par intégration de la couche de transposition, ladite couche de transposition étant mise en oeuvre dans la couche protocolaire.

3. Procédé selon la revendication 1 ou 2, caractérisé en qu'il est mis en oeuvre pour établir des échanges entre des terminaux mobiles selon la première norme de communication mobile placés sous la gestion du dispositif modifié et d'autres terminaux mobiles selon ladite première norme de communication mobile placés sous la gestion d'un second dispositif modifié, via le second réseau de communication mobile du type à large bande.

4. Procédé selon l'une des revendications 1 à 3, **caractérisé en ce qu'**il est mis en oeuvre pour établir des échanges entre des terminaux mobiles selon la première norme de communication mobile placés sous la gestion du dispositif modifié et des terminaux mobiles selon la seconde norme de communication mobile placés sous la couverture de stations de base (208 ; 2080 ; 2180) appartenant au second réseau de communication du type à large bande.

5. Procédé selon l'une quelconque des revendications précédentes, **caractérisé en ce que** le premier réseau de communication du type à bande étroite satisfait la norme TETRA « TErrestrial Trunked Radio ».

6. Procédé selon l'une quelconque des revendications 1 à 4, **caractérisé en ce que** le premier réseau de communication du type à bande étroite satisfait la norme P25 « APCO International Project 25 ».

7. Procédé selon l'une quelconque des revendications 1 à 4, **caractérisé en ce que** le premier réseau de communication du type à bande étroite satisfait la norme DMR.

8. Procédé selon l'une quelconque des revendications 1 à 7, **caractérisé en ce que** le second réseau de communication du type à large bande satisfait la norme 3GPP EPS et LTE « Long Term Evolution ».

9. Dispositif de gestion de coeur de réseau (200 ; 2000 ; 2100) appartenant à un premier réseau de communication mobile du type à bande étroite, ledit dispositif étant adapté pour être connecté à un second réseau de communication mobile du type à large bande (202 ; 2020 ; 2120) selon une seconde norme de communication mobile, ledit dispositif de gestion de coeur de réseau implémentant une couche protocolaire pour communiquer avec une première pluralité de station (204 ; 206) selon une première norme de communication mobile aptes à communiquer avec des terminaux selon ladite première norme de communication,
**caractérisé en ce que** ledit dispositif de gestion de coeur de réseau est modifié par intégration d'une couche de transposition dans ladite couche protocolaire, ladite couche protocolaire étant reliée audit second réseau de communication du type à large bande via une liaison du type « Internet Protocole » (IP), ladite couche protocolaire étant configurée pour transmettre toute donnée reçue par ledit dispositif de gestion de coeur de réseau vers ladite couche de transposition et ladite couche de transposition étant configurée pour transmettre toute donnée reçue par ladite couche de transposition vers ledit second réseau de communication.

10. Dispositif de gestion de coeur de réseau selon la revendication 9, **caractérisé en ce qu'**il est configuré pour établir des échanges entre des terminaux mobiles selon la première norme de communication mobile placés sous sa gestion ou sous celle d'une station avec laquelle il communique, et des terminaux mobiles selon la seconde norme de communication mobile placés sous la couverture de stations appartenant au second réseau de communication du type à large bande.

11. Dispositif de gestion de coeur de réseau selon la revendication 9 ou 10, **caractérisé en ce qu'**il est configuré pour établir des échanges entre des terminaux mobiles selon la première norme de communication mobile placés sous sa gestion ou sous celle d'une station avec laquelle il communique, et tout autre équipement fixe à la première norme de communication selon l'invention, via le second réseau de communication mobile du type à large bande.

12. Dispositif de gestion de coeur de réseau selon l'une quelconque des revendications 9 à 11, **caractérisé en ce qu'**il est configuré pour établir des échanges entre des terminaux mobiles selon la première norme de communication mobile placés sous sa gestion ou sous celle d'une station avec laquelle il communique, et d'autres terminaux mobiles placés sous la gestion d'un autre dispositif de gestion de coeur de réseau selon l'une quelconque des revendications 9 à 11, via le second réseau de communication mobile du type à large bande.

13. Dispositif de gestion de coeur de réseau selon l'une quelconque des revendications 9 à 12, **caractérisé en ce que** le second réseau de communication du type à large bande satisfait la norme 3GPP EPS et LTE « Long Term Evolution ».

14. Dispositif de gestion de coeur de réseau selon l'une quelconque des revendications 9 à 13, **caractérisé en ce que** la couche de transposition implémente une interface normalisée S1 de la famille des technologies 3GPP EPS et LTE.

15. Dispositif de gestion de coeur de réseau selon la revendication 14, **caractérisé en ce que** l'interface normalisée S1 est complétée par une interface normalisée X2 de la famille des technologies 3GPP EPS et LTE.

16. Dispositif de gestion de coeur de réseau selon la revendication 14 ou 15, **caractérisé en ce que** l'interface normalisée S1 est complétée par une interface normalisée M1 de la famille des technologies 3GPP EPS et LTE.

17. Système comprenant :
- un premier dispositif de gestion de coeur de réseau appartenant à un premier réseau de communication mobile du type à bande étroite, ledit premier dispositif de gestion de coeur de réseau implémentant une couche protocolaire pour communiquer avec une première pluralité de station selon une première norme de communication mobile,
- un deuxième dispositif de gestion de coeur de réseau appartenant à un second réseau de communication mobile du type à large bande selon une seconde norme de communication mobile,
ladite couche protocolaire étant reliée audit second réseau de communication du type à large bande via une liaison du type « Internet Protocole » (IP),
**caractérisé en ce que** ledit premier dispositif de gestion de coeur de réseau est modifié par intégration d'une couche de transposition dans ladite couche protocolaire, ladite couche protocolaire étant configurée pour transmettre toute donnée reçue par ledit dispositif de gestion de coeur de réseau vers ladite couche de transposition et ladite couche de transposition étant configurée pour transmettre toute donnée reçue par ladite couche de transposition vers ledit deuxième dispositif de gestion de coeur de réseau.

18. Système selon la revendication 17, **caractérisé en ce qu'**il comprend en outre un serveur de gestion de mobilité appartenant au second réseau de communication mobile prévu pour gérer la mobilité pour des terminaux aptes à communiquer selon la seconde norme de communication mobile, ledit serveur de gestion de mobilité étant apte à gérer également la mobilité pour des terminaux aptes à communiquer selon la première norme de communication mobile.

19. Système selon la revendication 17 ou 18, **caractérisé en ce qu'**il comprend en outre un serveur de gestion de services appartenant au second réseau de communication mobile prévu pour gérer les services pour des terminaux aptes à communiquer selon la seconde norme de communication mobile, ledit serveur de gestion de services étant apte à gérer également les services pour des terminaux aptes à communiquer selon la première norme de communication mobile.

20. Système selon l'une quelconque des revendications 17 à 19, **caractérisé en ce qu'**il comprend en outre un serveur de gestion d'applications appartenant au second réseau de communication mobile prévu pour gérer les applications pour des terminaux aptes à communiquer selon la seconde norme de communication mobile, ledit serveur de gestion d'applications étant apte à gérer également les applications pour des terminaux aptes à communiquer selon la première norme de communication mobile.

21. Système selon l'une quelconque des revendications 17 à 20, **caractérisé en ce qu'**il comprend en outre un serveur de gestion d'équipements d'infrastructure appartenant au second réseau de communication mobile prévu pour gérer les équipements d'infrastructure pour des terminaux aptes à communiquer selon la seconde norme de communication mobile, ledit serveur de gestion d'équipements d'infrastructure étant apte à gérer également les équipements d'infrastructure pour des terminaux aptes à communiquer selon la première norme de communication mobile.

22. Système selon l'une quelconque des revendications 17 à 21, **caractérisé en ce qu'**il comprend :
- au moins un autre dispositif de gestion de coeur de réseau appartenant à un autre réseau de communication mobile du type à bande étroite, ledit au moins un autre dispositif de gestion de coeur de réseau implémentant une couche protocolaire pour communiquer avec une autre pluralité de station selon une troisième norme de communication mobile, ladite couche protocolaire de cet autre dispositif de gestion de coeur de réseau étant reliée au second réseau de communication du type à large bande via une liaison du type « Internet Protocole » (IP),
cet autre dispositif de gestion de coeur de réseau étant modifié par intégration d'une couche de transposition dans ladite couche protocolaire de cet autre dispositif de gestion de coeur de réseau, cette couche protocolaire de cet autre dispositif de gestion de coeur de réseau étant configurée pour transmettre toute donnée reçue par cet autre dispositif de gestion de coeur de réseau vers ladite couche de transposition de cet autre dispositif de gestion de coeur de réseau et ladite couche de transposition de cet autre dispositif de gestion de coeur de réseau étant configurée pour transmettre toute donnée reçue par ladite couche de transposition de cet autre dispositif de gestion de coeur de réseau vers le deuxième dispositif de gestion de coeur de réseau.

23. Système selon la revendication 22, **caractérisé en ce que** la première norme de communication et la troisième norme de communication sont différentes.
